# EUROPEAN PATENT SPECIFICATION

(11) **EP 2 123 083 B1**
(45) Date of publication and mention of the grant of the patent: **19.08.2015**
(21) Application number: 08710957.5
(22) Date of filing: 01.02.2008
(51) Int. Cl.: H04W 24/10

(54) **MOBILE RADIO COMMUNICATIONS DEVICE MEASUREMENT**
MESSUNG EINER MOBILEN FUNKKOMMUNIKATIONSVORRICHTUNG
MESURE DE DISPOSITIF DE COMMUNICATION RADIO MOBILE

(30) Priority: 06.02.2007 GB 0702251
(43) Date of publication of application: 25.11.2009
(73) Proprietor: NEC Corporation, Minato-ku Tokyo 108-8001 (JP)
(72) Inventor: ROSIK, Christophe, Tokyo 108-8001 (JP); LAMPURE, Marianne, Tokyo 108-8001 (JP)
(74) Representative: Glawe, Delfs, Moll
(86) International application number: PCT/JP2008/052078
(87) International publication number: WO 2008/099764

(56) References cited:
- EP-A1- 1 478 197
- EP-A1- 1 720 289
- JP-A- 2005 094 672
- ERICSSON: "Idle Gaps for Handover Measurements in E-UTRAN", 3GPP DRAFT; R2-070046, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sorrento, Italy; 20070112, 12 January 2007 (2007-01-12), XP050133163, [retrieved on 2007-01-12]
- QUALCOMM EUROPE: "Measurement Gap Scheduling", 3GPP DRAFT; R2-063103, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Riga, Latvia; 20061101, 1 November 2006 (2006-11-01), XP050132613, [retrieved on 2006-11-01]
- NTT DOCOMO: "Inter-frequency/RAT Measurement Gap Control", 3GPP DRAFT; R2-060841, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Athens, Greece; 20060323, 23 March 2006 (2006-03-23), XP050130996, [retrieved on 2006-03-23]
- QUALCOMM EUROPE: 'Measurement gap scheduling' 3GPP TSG-RAN2 MEETING #50 vol. R2-060058, 13 January 2006, XP050130222

## Description

The present invention relates to measurement required of a mobile radio communications device when operating within a mobile radio communications network and, in particular, to a device, network device, and related method of facilitating such measurements.

In mobile radio communications networks, such as evolved Universal Terrestrial Radio Access eUTRA network, the eNodeB is arranged to control the allocation and de allocation of resources to the Long Term Evolution (LTE) User Equipment (UE) terminals. Such resources are generally scheduled by taking into account the Quality of Service (QoS) requirements associated with the radio bearers and also with regard to the channel quality information for each UE.

3GPP R2-070046 describes a method for performing handover measurements by a user equipment in a period notified by the network. EP 1 478 197 A1 discloses a similar method wherein the network notifies information related to a gap for measurements to the user equipment.

The data traffic arising in relation to the provision of such resources need not necessarily be continuous. For example, even with high bit-rates, the data traffic can be adapted by the eNodeB in order to create gaps therein. For lower bit-rates, the data traffic is in any case characterised by the inclusion of gaps therein.

Thus, while independent of the actual bit-rate, gaps within the data traffic can arise or be created, current network and UE arrangements nevertheless exhibit limitations and disadvantages insofar as the scheduling of UE measurements is disadvantageously restricted and the possibilities for scheduling measurements at the UEs is disadvantageously limited.

The present invention therefore seeks to provide for a mobile radio communications device, a network device, and related method of facilitating inter-RAT or inter-frequency measurements within a mobile radio communications device, and to related network signalling, which exhibit advantages over known such devices, methods and signalling.

According to a first aspect of the present invention there is provided a method of facilitating mobile radio communications device measurements within a mobile radio communications network according to claim 1.

The invention proves advantageous insofar as the mobile radio communications device can then employ the gaps arising or created in the data traffic to schedule its inter-RAT or inter-frequency measurements as appropriate. Through the provision of the above-mentioned indication, it readily becomes possible for the mobile radio communications device to determine the duration of such "non-data" periods well in advance and thereby readily determine whether or not the period of consecutive Transmission Timing Intervals (TTIs) without allocated Resource Blocks is sufficient for the required measurement.

Preferably, the said indications are included within the last Resource Block (PRB) of a series of such blocks.

Further, the aforesaid measurement can advantageously comprise a measurement requiring more than one TTI.

Yet further, the method can include the step of optimising the network data flow so as to create the said subsequent consecutive TTIs without allocated PRBs.

According to one particular feature, the aforementioned indication can be included in a field within downlink scheduling information.

As such, the field can provide an indication of the next successive TTIs that can be scheduled and, alternatively, the maximum number of consecutive TTIs that can be scheduled.

It will of course be appreciated that each TTI can comprise a subframe.

The method can include the step of facilitating inter-RAT or inter-frequency measurements in a mobile radio communications device arranged to receive signalling from an eNodeB.

In this manner, the method can provide for the said indication within Long Term Evolution (LTE) network cells.

According to another aspect of the present invention, there is provided a mobile radio communications device arranged for operation within a mobile radio communications network and for performing measurements therein according to claim 6.

As before, the mobile radio communications device can be arranged to receive said indication when included within the last of a series of PRBs.

Also, the said measurement to be conducted by the mobile radio communications device can be one requiring more than one TTI.

Yet further, the mobile radio communications device can be arranged to receive the said indication when included in a field within downlink scheduling information.

As before, the field can be arranged to provide an indication of the next successive TTIs with no allocated resource blocks that can be scheduled, or alternatively, the maximum number of consecutive TTIs with no resource blocks that can be scheduled.

Further, each TTI comprises a subframe and the mobile radio communications device can be arranged to receive the said indication from an eNodeB.

The mobile radio communications device also can be arranged to receive said indication, and conduct its inter-RAT or inter-frequency measurements, within LTE network cells.

To take in account the possible Hybrid-ARQ retransmission, the mobile radio communications device can start its measurements T0 after the reception of the latest received PRB in order. T0 would be fixed in UE and estimated to the Hybrid-ARQ round trip time.

With regard to yet a further aspect of the present invention, there is provided a mobile radio communications network device for delivering Resource Blocks to a mobile radio communications device within the network according to claim 11.

As suggested above, the network device can be arranged to provide the said indication within the last PRB of a series of such blocks.

Further, the network device can be arranged to modify the data flow within the network so as to provide for the said subsequent TTIs with no data.

Yet further, the network device can be arranged to provide the said indication in a field within downlink scheduling information.

Such an element can advantageously be arranged to provide an indication of the next successive TTIs with no resource blocks allocated that can be scheduled, or alternatively, the maximum number of consecutive TTIs with no data that can be scheduled.

Again, each TTI can comprise a subframe and, in one particular embodiment, the mobile radio communications network device can comprise an eNodeB.

In such a manner, the network device can be arranged to operate within an LTE network cell.

As should be appreciated from the above, the concept of the present invention allows for the provision of information within a mobile radio communications device concerning radio resource scheduling in order to allow the device to accurately manage its inter-RAT or inter-frequency measurements during "no-data" periods.

Such accurate measurement and use of such periods, and the general resource scheduling, is not generally possible within the current state of the art.

The invention is described further hereinafter, by way of example only, with reference to the accompanying drawings in which:
Fig.1 is a timing diagram illustrating the limitation on scheduling arising in the current art;
Fig.2 is a timing diagram illustrating the operation of one embodiment of the present invention and serving to overcome limitations found in the current art; and
Figs.3A and 3B illustrate the operation of one particular embodiment of the present invention depending upon different indications provided within PRBs arising within network signalling.

As will be appreciated, the broad concept of the present invention can be embodied within an arrangement in which the last PRB in a series of PRBs sent within an LTE cell by an enodeB, contains an field specifying the number of next consecutive TTIs in which there are no PRBs allocated to the mobile radio communications network.

Such information can advantageously be employed by the mobile radio communications device to plan and manage the use of the "no traffic" periods in order to perform its required measurements. As will be appreciated, the concept of the present invention is particularly useful for performance of measurements requiring more than one TTI such as, for example, inter Radio Access Technology (RAT) measurements.

For measurements requiring less than one TTI, the mobile radio communications device can perform these as soon as it is found that no resources are allocated to it within a single TTI.

While data traffic at low bit rates will inherently have periods with no data arising therein, high bit rate traffic can be adapted at the eNodeB such that gaps are introduced by the eNodeB as required.

Although the measurement duration for LTE cells might be considered as not yet defined, the example of UTRA cells provides timing along the lines of the following:
- Step 1 duration (for slot synchronisation) should be approximately in the order of 30ms
- Step 2 duration (for frame synchronisation and scrambling code group detection) + Step 3 duration (for scrambling code detection) should be approximately in the order of 20ms
- Cell level measurement duration should be approximately in the order of 2 ms

Furthermore, the time to switch the RF from LTE to UTRAN, and then after UTRA measurements, from UTRAN to LTE, should approximately be in the order of 0.4 ms.

So if an LTE mobile radio communications device terminal needs to perform one measurement on one UTRA cell, the terminal will require 30 + 20 + 2 = 52ms every 5 seconds (generally required that the MS shall report a new best UTRAN cell at the least 5 seconds after it has been activated).

Even if such measurements can be performed in "burst" mode in several gaps, the minimum gap duration required is that defined by the cell level measurement, which is 2 ms, and in addition to the 0.4 ms of for the RF switch, which in total equates to three LTE TTIs.

This shows that in most cases, the mobile radio communications device will require more than one TTI to perform a UTRA Cell level measurement, and so the concept of the present invention serving to inform the device on how many consecutive subframes have no PRB can be advantageously employed.

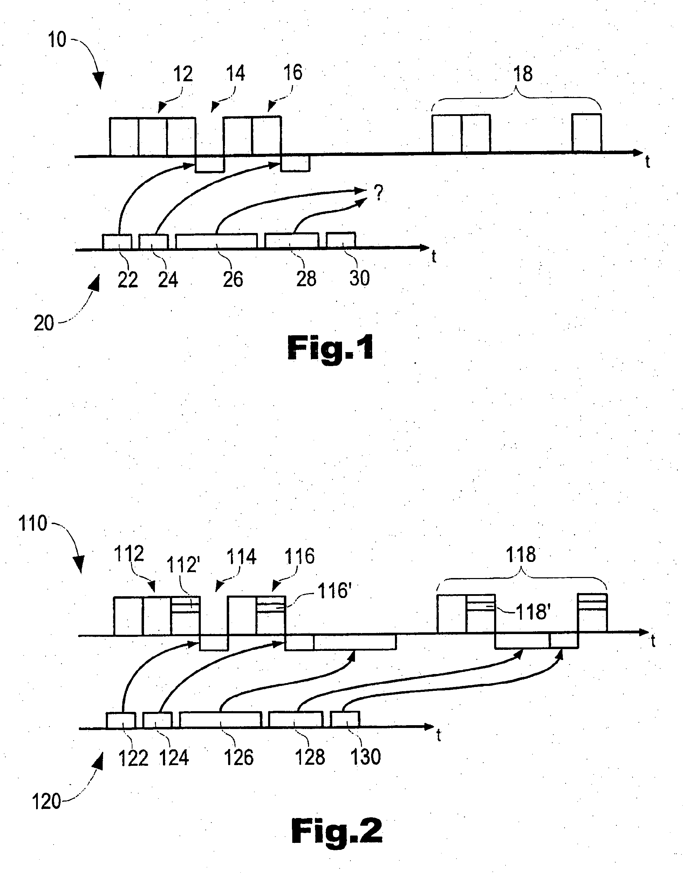

The basic characteristics of the concept of the present invention are readily illustrated through a comparison of Figs. 1 and 2.

In Fig. 1, there is illustrated a timing diagram 10 according to the current state of the art and showing the delivery of a series of PRBs 12, 16, 18 from an eNodeB to a mobile radio communications device.

As will be appreciated, the PRBs are shown as an initial series of three PRBs 12 separated from a pair of PRBs 16 by a "no traffic" period 14, and then followed by a group 18 comprising a pair of PRBs and a single PRB.

The timing diagram also shows a series of planned measurements 20 which are required at the mobile radio communications device: the measurements being in series as two single measurements requiring one subframe 22, 24, followed by a three sub-frame measurement 26 and then followed by a two subframe measurement 28 and finally a single subframe measurement 30.

As will be appreciated, a mobile radio communications device can perform its required measurements only when it sees that no PRB is allocated to it and so, to prevent interruption of such measurements, only single subframe measurements are possible since the mobile radio communications device cannot identify whether or not the "no single period" 14 might last for more than one subframe.

On this basis, only planned measurements 22, 24 can be executed as indicated, the subsequent measurements 26, 28, each requiring more than a single subframe, cannot be performed even though, subsequent to the pair of PRBs 16, there is sufficient "no signal period" within which the three subframe planned measurement 26 could in fact be performed.

Turning therefore to Fig. 2, there is illustrated a similar timing diagram but in accordance with an embodiment of the present invention.

Again, a timing line 110 is illustrated for a series of PRBs 112, 116, 118 and with the PRBs 112 and 116 again being separated by a single subframe period 114.

Also, as with Fig. 1, a series of planned measurements are indicated which again comprise two single subframe measurements 122, 124, a three subframe measurement 126, a two-subframe measurement 128 and a further single subframe measurement 130.

Importantly with regard to the embodiment as illustrated in Fig. 2, each of the final PRBs in the respective series of PRBs 112, 116, 118 illustrated, includes an indication, comprising a field 112' 116' and 118', which serves to confirm the number of subsequent consecutive subframes from which no data arises.

That is, field 112' indicates that the subsequent "no data" period 114 comprises a single subframe, whereas field 116' indicates that the subsequent "no data" period comprises a five subframe period.

On this basis, the planned measurement 122 can, as with Fig. 1, again be conducted in the initial single subframe period 114, and, in view of the signalling 116 comprising the field 116', the mobile radio communications device knows that there is sufficient time before the next series of PRBs 118 arises, for execution of the planned measurements 124 and 126: totalling four subframes. Yet further, the field 118' serves to indicate that there is sufficient subsequent period for the completion of the planned subframe measurement 128 and the single subframe measurement 130.

Thus, unlike the scenario illustrated with regard to Fig. 1, the embodiment of the present invention as illustrated in Fig. 2 allows for the mobile radio communications device to quickly and efficiently complete all of its required measurements within the same data period as arising in relation to Fig. 1.

As noted previously, this information can be included in the downlink scheduling information, for example as part of resource assignment.

To confirm the above operation, if the field 112', 116' or 118' is not present, PRBs are assumed allocated in the next subframe and measurements cannot be planned or the eNodeB cannot provide prediction for such measurements.

Field is arranged to specify the number of next successive TTIs with no transmitted data (NTTI).

Preferably the maximum number of consecutive TTIs that the eNB is able to schedule (NTTImax) can be defined according to eNB scheduler capabilities, QoS requirements and channel quality information. Further the value can be dynamically modified if required.

As a further consideration, Nlim an be defined so that NTTImax never exceed Nlim, in order to guarantee a degree of flexibility in scheduler algorithm and to prevent eventual exceptions. If however UE detects that NTTI exceeds Nlim, it considers that the value is erroneous and can determine that its measurements should not be performed. Nlim could be estimated to run the same duration to that of the max gaps length defined in (TGLI, TGL2) for UTRAN i.e. fourteen slots/ ten TTI of 1ms length (refer to 25.922 & 25.133), and according also to scheduler capabilities.

On this basis, NTTI can be set to {1, ..., NTTImax, ..., Nlim}.

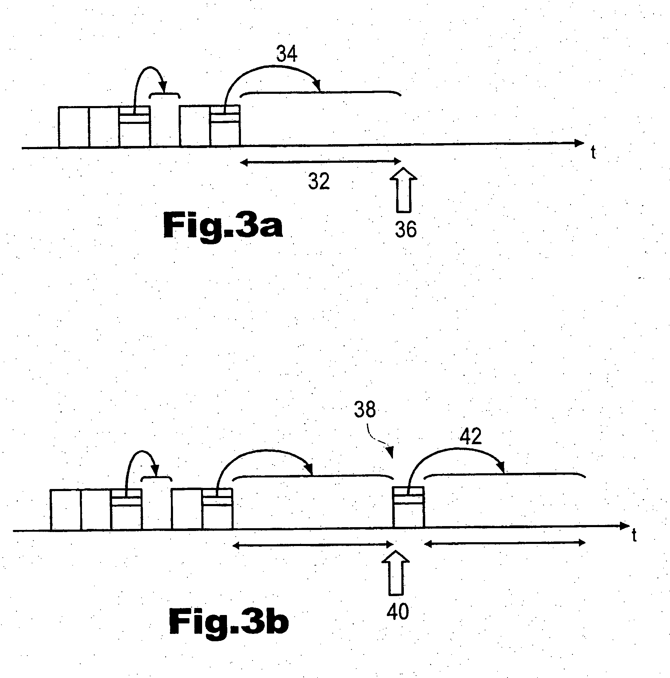

However, Fig. 3a illustrates that, if the eNB scheduler cannot foresee the next allocated PRB after NTTImax (32), it sets NTTI to NTTImax (34). In such a scenario, the mobile radio communications device stops its measurements at subframe 'NTTImax+1' (36) and checks for allocated PRBs. Such a manner of operation is illustrated in Fig. 3a.

Next, Fig. 3b illustrates a scenario wherein, if the eNodeB scheduler is still not able to predict the next allocation of resources at subframe NTTImax (38), it can decide to send an indication at subframe NTTImax +1 (40) to the mobile radio communications device by allocating a PRB with the information, described in the innovation, set to NTTImax (42).

As will therefore be appreciated, the present invention finds particular use with regard to LTE related products, such as eNodeBs and the related UEs and so has the potential for advantageous use within 3GPP standards.

## Claims

1. A method of facilitating mobile radio communications device measurements within a mobile radio communications network, comprising the steps of:
including, in a last Resource Block of a series of Resource Blocks (112, 116, 118) sent to a mobile radio communications device from a network device of the mobile radio communications network, an indication of the number of subsequent consecutive Transmission Timing Intervals with no allocated Resource Blocks; and
planning and managing said indication in the mobile radio communications device to perform the measurements (126, 128) requiring more than one Transmission Timing Interval,
wherein said indication provides the maximum number of consecutive Transmission Timing Intervals that can be scheduled for the measurements if the network device is not able to foresee the next allocated resource blocks after the maximum number NTTImax of consecutive Transmission Timing Intervals.

2. The method as claimed in Claim 1, wherein when the network device is still not able to predict the next allocation of resource at the last subframe of the maximum number of consecutive Transmission Timing Intervals, sending the indication at a subframe immediately following the last subframe of the maximum number of consecutive Transmission Timing Intervals to the mobile radio communication device by allocating the Resource Block with the information set to the maximum number of consecutive Transmission Timing Intervals.

3. The method as claimed in Claim 1 or Claim 2, wherein said indication comprises a field (112', 116', 118') which serves to confirm the number of subsequent consecutive subframes from which no data arises and said field is included within downlink scheduling information as part of resource assignment from the network device.

4. The method as claimed in any one of Claims 1 to 3, wherein the maximum number NTTImax of consecutive Transmission Timing Intervals that the network device is able to schedule is defined according to scheduler capabilities of the network device, QoS requirements and channel quality information.

5. The method as claimed in any one of Claims 1 to 4, wherein a never exceed limit Nlim is assigned to the maximum number of consecutive Transmission Timing Intervals, and when the mobile radio communications device detects that the maximum number of consecutive Transmission Timing Intervals exceeds the never exceed limit, the value of the maximum number of consecutive Transmission Timing Intervals is regarded as erroneous and the measurements are not performed.

6. A mobile radio communications device arranged for operation within a mobile radio communications network and for performing measurements therein, the device comprising:
receive means being arranged to receive a series of Resource Blocks (112, 116, 118) from a network device of the mobile radio communications network including an indication of the number of subsequent consecutive Transmission Timing Intervals having no allocated Resource Blocks in a last Resource Block of the series of Resource Blocks; and
schedule means being arranged to plan and to manage said indication to perform the measurements (126, 128) requiring more than one Transmission Timing Interval,
wherein said indication provides the maximum number of consecutive Transmission Timing Intervals that can be scheduled for the measurements if the network device is not able to foresee the next allocated resource blocks after the maximum number NTTImax of consecutive Transmission Timing Intervals.

7. The device as claimed in Claim 6,
wherein when the network device is still not able to predict the next allocation of resource at the last subframe of the maximum number of consecutive Transmission Timing Intervals, said receive means is adapted to receive the indication at a subframe immediately following the last subframe of the maximum number of consecutive Transmission Timing Intervals by the Resource Block being allocated with the information set to the maximum number of consecutive Transmission Timing Intervals.

8. The device as claimed in Claim 6 or Claim 7, wherein said indication comprises a field (112', 116', 118') which serves to confirm the number of subsequent consecutive subframes from which no data arises and said field is included within downlink scheduling information as part of resource assignment from the network device.

9. The device as claimed in any one of Claims 6 to 8, wherein the maximum number NTTImax of consecutive Transmission Timing Intervals that the network device is able to schedule is defined according to scheduler capabilities of the network device, QoS requirements and channel quality information.

10. The device as claimed in any one of Claims 6 to 9, wherein a never exceed limit Nlim is assigned to the maximum number of consecutive Transmission Timing Intervals, and the device is adapted such that when the maximum number of consecutive Transmission Timing Intervals exceeding the never exceed limit is detected, the value of the maximum number of consecutive Transmission Timing Intervals is regarded as erroneous and the measurements are not performed.

11. A mobile radio communications network device arranged for delivering Resource Blocks to a mobile radio communications device within the network, the network device comprising:
schedule means being arranged to schedule the Resource Blocks and to include an indication of subsequent consecutive Transmission Timing Intervals having no allocated Resource Blocks in a last Resource Block of a series of Resource Blocks (112, 116, 118) to be delivered to the mobile radio communications device; and
delivery means being arranged to deliver the series of Resource Blocks to the mobile radio communications device which plans to perform measurements (126, 128) requiring more than one Transmission Timing Interval with referring to said indication, and
wherein said indication provides the maximum number of consecutive Transmission Timing Intervals that can be scheduled for the measurements if the schedule means is not able to foresee the next allocated resource blocks after the maximum number NTTImax of consecutive Transmission Timing Intervals.

12. The network device as claimed in Claim 11,
wherein when said schedule means is still not able to predict the next allocation of resource at the last subframe of the maximum number of consecutive Transmission Timing Intervals, said schedule means is adapted to allocate the Resource Block with the information set to the maximum number of consecutive Transmission Timing Intervals at a subframe immediately following the last subframe of the maximum number of consecutive Transmission Timing Intervals.

13. The network device as claimed in Claim 11 or Claim 12, wherein said indication comprises a field (112', 116', 118') which serves to confirm the number of subsequent consecutive subframes from which no data arises and said filed is included within downlink scheduling information as part of resource assignment.

14. The network device as claimed in any one of Claims 11 to 13, wherein the maximum number NTTImax of consecutive Transmission Timing Intervals that said schedule means is able to schedule is defined according to scheduler capabilities of said schedule means, QoS requirements and channel quality information.

15. The network device as claimed in any one of Claims 11 to 14, wherein a never exceed limit Nlim is assigned to the maximum number of consecutive Transmission Timing Intervals, and the network device is adapted such that when the maximum number of consecutive Transmission Timing Intervals exceeding the never exceed limit is detected at the mobile radio communications device, the value of the maximum number of consecutive Transmission Timing Intervals is regarded as erroneous and the measurements are not performed at the mobile radio communications device.

## Patentansprüche

1. Verfahren zum Ermöglichen von Mobilfunkkommunikationsvorrichtungsmessungen innerhalb eines Mobilfunkkommunikationsnetzes, das die folgenden Schritte umfasst:
Einschließen, in einem letzten Ressourcenblock einer Reihe von Ressourcenblöcken (112, 116, 118), die von einer Netzvorrichtung des Mobilfunkkommunikationsnetzes zu einer Mobilfunkkommunikationsvorrichtung gesendet werden, einer Angabe der Anzahl nachfolgender konsekutiver Sendezeitintervalle ohne zugeordnete Ressourcenblöcke; und
Planen und Verwalten der Angabe in der Mobilfunkkommunikationsvorrichtung, um die Messungen (126, 128) durchzuführen, die mehr als ein Sendezeitintervall erfordern,
wobei die Angabe die maximale Anzahl konsekutiver Sendezeitintervalle bereitstellt, die für die Messungen disponiert werden kann, wenn die Netzvorrichtung die nächsten zugeordneten Ressourcenblöcke nach der maximalen Anzahl NTTImax konsekutiver Sendezeitintervalle nicht vorhersehen kann.

2. Verfahren gemäß Anspruch 1, wobei, wenn die Netzvorrichtung weiterhin nicht in der Lage ist, die nächste Zuordnung von Ressourcen an dem letzten Subrahmen der maximalen Anzahl konsekutiver Sendezeitintervalle vorherzusagen, die Angabe an einem Subrahmen, der dem letzten Subrahmen der maximalen Anzahl konsekutiver Sendezeitintervalle unmittelbar folgt, zu der Mobilfunkkommunikationsvorrichtung gesendet wird, indem der Ressourcenblock mit der auf die maximale Anzahl konsekutiver Sendezeitintervalle festgesetzten Information zugeordnet wird.

3. Verfahren gemäß Anspruch 1 oder Anspruch 2, wobei die Angabe ein Feld (112', 116', 118') umfasst, das dazu dient, die Anzahl nachfolgender konsekutiver Subrahmen zu bestätigen, aus denen keine Daten hervorgehen, und das Feld in Abwärtsstreckendisponierungsinformationen als Teil der Ressourcenzuordnung von der Netzvorrichtung eingeschlossen ist.

4. Verfahren gemäß einem der Ansprüche 1 bis 3, wobei die maximale Anzahl NTTImax konsekutiver Sendezeitintervalle, welche die Netzvorrichtung disponieren kann, gemäß Disponentenfähigkeiten der Netzvorrichtung, QoS-Anforderungen und Kanalqualitätsinformationen festgelegt wird.

5. Verfahren gemäß einem der Ansprüche 1 bis 4, wobei der maximalen Anzahl konsekutiver Sendezeitintervalle eine Niemalsüberschreitungsgrenze Nlim zugeordnet wird und, wenn die Mobilfunkkommunikationsvorrichtung erfasst, dass die maximale Anzahl konsekutiver Sendezeitintervalle die Niemalsüberschreitungsgrenze überschreitet, der Wert der maximalen Anzahl konsekutiver Sendezeitintervalle als fehlerhaft betrachtet wird und die Messungen nicht durchgeführt werden.

6. Mobilfunkkommunikationsvorrichtung, die für den Betrieb innerhalb eines Mobilfunkkommunikationsnetzes und zum Durchführen von Messungen darin eingerichtet ist, wobei die Vorrichtung Folgendes umfasst:
Empfangsmittel, das zum Empfangen einer Reihe von Ressourcenblöcken (112, 116, 118) aus einer Netzvorrichtung des Mobilfunkkommunikationsnetzes einschließlich einer Angabe der Anzahl nachfolgender konsekutiver Sendezeitintervalle, die keine zugeordneten Ressourcenblöcke in einem letzten Ressourcenblock der Reihe von Ressourcenblöcken aufweisen, eingerichtet ist; und
Dispositionsmittel, das zum Planen und Verwalten der Angabe eingerichtet ist, um die Messungen (126, 128), die mehr als ein Sendezeitintervall erfordern, durchzuführen,
wobei die Angabe die maximale Anzahl konsekutiver Sendezeitintervalle bereitstellt, die für die Messungen disponiert werden kann, wenn die Netzvorrichtung die nächsten zugeordneten Ressourcenblöcke nach der maximalen Anzahl NTTImax konsekutiver Sendezeitintervalle nicht vorhersehen kann.

7. Vorrichtung gemäß Anspruch 6,
wobei, wenn die Netzvorrichtung weiterhin nicht in der Lage ist, die nächste Zuordnung von Ressourcen an dem letzten Subrahmen der maximalen Anzahl konsekutiver Sendezeitintervalle vorherzusagen, das Empfangsmittel eingerichtet ist, die Angabe an einem Subrahmen zu empfangen, der dem letzten Subrahmen der maximalen Anzahl konsekutiver Sendezeitintervalle unmittelbar folgt, indem der Ressourcenblock mit der auf die maximale Anzahl konsekutiver Sendezeitintervalle festgesetzten Information zugeordnet wird.

8. Vorrichtung gemäß Anspruch 6 oder Anspruch 7, wobei die Angabe ein Feld (112', 116', 118') umfasst, das dazu dient, die Anzahl nachfolgender konsekutiver Subrahmen zu bestätigen, aus denen keine Daten hervorgehen, und das Feld in Abwärtsstreckendisponierungsinformationen als Teil der Ressourcenzuordnung von der Netzvorrichtung eingeschlossen ist.

9. Vorrichtung gemäß einem der Ansprüche 6 bis 8, wobei die maximale Anzahl NTTImax konsekutiver Sendezeitintervalle, welche die Netzvorrichtung disponieren kann, gemäß Disponentenfähigkeiten der Netzvorrichtung, QoS-Anforderungen und Kanalqualitätsinformationen festgelegt wird.

10. Vorrichtung gemäß einem der Ansprüche 6 bis 9, wobei der maximalen Anzahl konsekutiver Sendezeitintervalle eine Niemalsüberschreitungsgrenze Nlim zugeordnet wird und die Vorrichtung derart angepasst ist, dass, wenn erfasst wird, dass die maximale Anzahl konsekutiver Sendezeitintervalle die Niemalsüberschreitungsgrenze überschreitet, der Wert der maximalen Anzahl konsekutiver Sendezeitintervalle als fehlerhaft betrachtet wird und die Messungen nicht durchgeführt werden.

11. Mobilfunkkommunikationsnetzvorrichtung, die zum Liefern von Ressourcenblöcken an eine Mobilfunkkommunikationsvorrichtung innerhalb des Netzes eingerichtet ist, wobei die Netzvorrichtung Folgendes umfasst:
Disponierungsmittel, das eingerichtet ist, die Ressourcenblöcke zu disponieren und eine Angabe nachfolgender konsekutiver Sendezeitintervalle einzuschließen, die keine zugeordneten Ressourcenblöcke in einem letzten Ressourcenblock einer Reihe von Ressourcenblöcke (112, 116, 118), die an die Mobilfunkkommunikationsvorrichtung geliefert werden sollen, aufweisen; und
Liefermittel, das eingerichtet ist zum Liefern der Reihe von Ressourcenblöcken an die Mobilfunkkommunikationsvorrichtung, die das Durchführen von Messungen (126, 128), welche mehr als ein Sendezeitintervall erfordern, mit Bezug auf die Angabe, plant, und
wobei die Angabe die maximale Anzahl konsekutiver Sendezeitintervalle bereitstellt, die für die Messungen disponiert werden kann, wenn das Disponierungsmittel nicht in der Lage ist, die nächsten zugeordneten Ressourcenblöcke nach der maximalen Anzahl NTTImax konsekutiver Sendezeitintervalle vorherzusehen.

12. Netzvorrichtung gemäß Anspruch 11,
wobei, wenn das Disponierungsmittel weiterhin nicht in der Lage ist, die nächste Zuordnung von Ressourcen an dem letzten Subrahmen der maximalen Anzahl konsekutiver Sendezeitintervalle vorherzusagen, das Disponierungsmittel angepasst ist, den Ressourcenblock zuzuordnen mit der Information, die auf die maximale Anzahl konsekutiver Sendezeitintervalle eingestellt ist, an einem Subrahmen, der dem letzten Subrahmen der maximalen Anzahl konsekutiver Sendezeitintervalle unmittelbar folgt.

13. Netzvorrichtung gemäß Anspruch 11 oder 12, wobei die Angabe ein Feld (112', 116', 118') umfasst, das dazu dient, die Anzahl nachfolgender konsekutiver Subrahmen zu bestätigen, aus denen keine Daten hervorgehen, und das Feld in Abwärtsstreckendisponierungsinformationen als Teil der Ressourcenzuordnung eingeschlossen ist.

14. Netzvorrichtung gemäß einem der Ansprüche 11 bis 13, wobei die maximale Anzahl NTTImax konsekutiver Sendezeitintervalle, welche die Netzvorrichtung disponieren kann, gemäß Disponentenfähigkeiten der Netzvorrichtung, QoS-Anforderungen und Kanalqualitätsinformationen festgelegt wird.

15. Netzvorrichtung gemäß einem der Ansprüche 11 bis 14, wobei der maximalen Anzahl konsekutiver Sendezeitintervalle eine Niemalsüberschreitungsgrenze Nlim zugeordnet wird und die Netzvorrichtung derart angepasst ist, dass, wenn an der Mobilfunkkommunikationsvorrichtung erfasst wird, dass die maximale Anzahl konsekutiver Sendezeitintervalle die Niemalsüberschreitungsgrenze überschreitet, der Wert der maximalen Anzahl konsekutiver Sendezeitintervalle als fehlerhaft betrachtet wird und die Messungen an der Mobilfunkkommunikationsvorrichtung nicht durchgeführt werden.

## Revendications

1. Procédé de facilitation de mesures de dispositif de communication radio mobile au sein d'un réseau de communication radio mobile, comprenant les étapes ci-dessous consistant à :
inclure, dans un dernier bloc de ressources d'une série de blocs de ressources (112, 116, 118) envoyé à un dispositif de communication radio mobile, à partir d'un dispositif de réseau du réseau de communication radio mobile, une indication du nombre d'intervalles de temps de transmission consécutifs subséquents sans blocs de ressources alloués ; et
planifier et gérer ladite indication dans le dispositif de communication radio mobile en vue de mettre en oeuvre les mesures (126, 128) nécessitant plus d'un intervalle de temps de transmission ;
dans lequel ladite indication fournit le nombre maximum d'intervalles de temps de transmission consécutifs qui peuvent être ordonnancés pour les mesures si le dispositif de réseau n'est pas en mesure de prévoir les blocs de ressources alloués successifs après le nombre maximum « NTTImax » d'intervalles de temps de transmission consécutifs.

2. Procédé selon la revendication 1, dans lequel, lorsque le dispositif de réseau n'est toujours pas en mesure de prédire l'allocation de ressources successive au niveau de la dernière sous-trame du nombre maximum d'intervalles de temps de transmission consécutifs, le procédé comporte l'étape consistant à envoyer l'indication au niveau d'une sous-trame suivant immédiatement la dernière sous-trame du nombre maximum d'intervalles de temps de transmission consécutifs au dispositif de communication radio mobile, en allouant le bloc de ressources avec les informations définies sur le nombre maximum d'intervalles de temps de transmission consécutifs.

3. Procédé selon la revendication 1 ou 2, dans lequel ladite indication comprend un champ (112', 116', 118') qui sert à confirmer le nombre de sous-trames consécutives subséquentes à partir desquelles aucune donnée ne se présente, et ledit champ est inclus dans des informations d'ordonnancement de liaison descendante dans le cadre d'une affectation de ressources à partir du dispositif de réseau.

4. Procédé selon l'une quelconque des revendications 1 à 3, dans lequel le nombre maximum « NTTImax » d'intervalles de temps de transmission consécutifs que le dispositif de réseau est en mesure d'ordonnancer est défini selon des capacités d'ordonnanceur du dispositif de réseau, des exigences de qualité QoS et des informations de qualité de canal.

5. Procédé selon l'une quelconque des revendications 1 à 4, dans lequel une limite à ne jamais dépasser « Nlim » est affectée au nombre maximum d'intervalles de temps de transmission consécutifs, et lorsque le dispositif de communication radio mobile détecte que le nombre maximum d'intervalles de temps de transmission consécutifs dépasse la limite à ne jamais dépasser, la valeur du nombre maximum d'intervalles de temps de transmission consécutifs est considérée comme erronée et les mesures ne sont pas mises en oeuvre.

6. Dispositif de communication radio mobile agencé en vue d'un fonctionnement dans un réseau de communication radio mobile et de manière à y mettre en oeuvre des mesures, le dispositif comprenant :
un moyen de réception agencé de manière à recevoir une série de blocs de ressources (112, 116, 118) en provenance d'un dispositif de réseau du réseau de communication radio mobile, incluant une indication du nombre d'intervalles de temps de transmission consécutifs subséquents ne présentant pas de blocs de ressources alloués dans un dernier bloc de ressources de la série de blocs de ressources ; et
un moyen d'ordonnancement agencé de manière à planifier et gérer ladite indication en vue de mettre en oeuvre les mesures (126, 128) nécessitant plus d'un intervalle de temps de transmission ;
dans lequel ladite indication fournit le nombre maximum d'intervalles de temps de transmission consécutifs qui peuvent être ordonnancés pour les mesures si le dispositif de réseau n'est pas en mesure de prévoir les blocs de ressources alloués successifs après le nombre maximum « NTTImax » d'intervalles de temps de transmission consécutifs.

7. Dispositif selon la revendication 6,
dans lequel, lorsque le dispositif de réseau n'est toujours pas en mesure de prédire l'allocation de ressources successive au niveau de la dernière sous-trame du nombre maximum d'intervalles de temps de transmission consécutifs, ledit moyen de réception est apte à recevoir l'indication au niveau d'une sous-trame suivant immédiatement la dernière sous-trame du nombre maximum d'intervalles de temps de transmission consécutifs par le biais du bloc de ressources alloué avec des informations définies sur le nombre maximum d'intervalles de temps de transmission consécutifs.

8. Dispositif selon la revendication 6 ou 7, dans lequel ladite indication comprend un champ (112', 116', 118') qui sert à confirmer le nombre de sous-trames consécutives subséquentes à partir desquelles aucune donnée ne se présente, et ledit champ est inclus dans des informations d'ordonnancement de liaison descendante dans le cadre d'une affectation de ressources à partir du dispositif de réseau.

9. Dispositif selon l'une quelconque des revendications 6 à 8, dans lequel le nombre maximum « NTTImax » d'intervalles de temps de transmission consécutifs que le dispositif de réseau est en mesure d'ordonnancer est défini selon des capacités d'ordonnanceur du dispositif de réseau, des exigences de qualité QoS et des informations de qualité de canal.

10. Dispositif selon l'une quelconque des revendications 6 à 9, dans lequel une limite à ne jamais dépasser « Nlim » est affectée au nombre maximum d'intervalles de temps de transmission consécutifs, et dans lequel le dispositif est adapté de sorte que, lorsque le nombre maximum d'intervalles de temps de transmission consécutifs dépassant la limite à ne jamais dépasser est détecté, la valeur du nombre maximum d'intervalles de temps de transmission consécutifs est considérée comme erronée et les mesures ne sont pas mises en oeuvre.

11. Dispositif de réseau de communication radio mobile agencé de manière à délivrer des blocs de ressources à un dispositif de communication radio mobile au sein du réseau, le dispositif de réseau comprenant :
un moyen d'ordonnancement agencé de manière à ordonnancer les blocs de ressources et à inclure une indication d'intervalles de temps de transmission consécutifs subséquents ne présentant pas de blocs de ressources alloués dans un dernier bloc de ressources d'une série de blocs de ressources (112, 116, 118) à délivrer au dispositif de communication radio mobile ; et
un moyen de fourniture agencé de manière à délivrer la série de blocs de ressources au dispositif de communication radio mobile qui planifie de mettre en oeuvre des mesures (126, 128) nécessitant plus d'un intervalle de temps de transmission en référence à ladite indication ; et
dans lequel ladite indication fournit le nombre maximum d'intervalles de temps de transmission consécutifs qui peuvent être ordonnancés pour les mesures si le moyen d'ordonnancement n'est pas en mesure de prévoir les blocs de ressources alloués successifs après le nombre maximum « NTTImax » d'intervalles de temps de transmission consécutifs.

12. Dispositif de réseau selon la revendication 11,
dans lequel, lorsque ledit moyen d'ordonnancement n'est toujours pas en mesure de prédire l'allocation de ressources successive au niveau de la dernière sous-trame du nombre maximum d'intervalles de temps de transmission consécutifs, ledit moyen d'ordonnancement est apte à allouer le bloc de ressources avec les informations définies sur le nombre maximum d'intervalles de temps de transmission consécutifs au niveau d'une sous-trame suivant immédiatement la dernière sous-trame du nombre maximum d'intervalles de temps de transmission consécutifs.

13. Dispositif de réseau selon la revendication 11 ou 12, dans lequel ladite indication comprend un champ (112', 116', 118') qui sert à confirmer le nombre de sous-trames consécutives subséquentes à partir desquelles aucune donnée ne se présente, et ledit champ est inclus dans des informations d'ordonnancement de liaison descendante dans le cadre d'une affectation de ressources.

14. Dispositif de réseau selon l'une quelconque des revendications 11 à 13, dans lequel le nombre maximum « NTTImax » d'intervalles de temps de transmission consécutifs que ledit moyen d'ordonnancement est en mesure d'ordonnancer est défini selon des capacités d'ordonnanceur dudit moyen d'ordonnancement, des exigences de qualité QoS et des informations de qualité de canal.

15. Dispositif de réseau selon l'une quelconque des revendications 11 à 14, dans lequel une limite à ne jamais dépasser « Nlim » est affectée au nombre maximum d'intervalles de temps de transmission consécutifs, et dans lequel le dispositif de réseau est adapté de sorte que, lorsque le nombre maximum d'intervalles de temps de transmission consécutifs dépassant la limite à ne jamais dépasser est détecté au niveau du dispositif de communication radio mobile, la valeur du nombre maximum d'intervalles de temps de transmission consécutifs est considérée comme erronée et les mesures ne sont pas mises en oeuvre au niveau du dispositif de communication radio mobile.
